# EUROPEAN PATENT APPLICATION

(11) **EP 4 810 442 A1**
(43) Date of publication of application: **23.09.2026**
(21) Application number: 24891499.6
(22) Date of filing: 15.11.2024
(51) Int. Cl.: C01B 35/02, C01B 35/04, C01G 1/00, H01B 13/00, H01F 6/06

(54) **BORON POWDER, METHOD FOR PRODUCING MAGNESIUM DIBORIDE, AND MAGNESIUM DIBORIDE BULK**

(30) Priority: 17.11.2023 JP 2023195915; 29.03.2024 JP 2024057471
(71) Applicant: Tosoh Corporation, Shunan-shi, Yamaguchi 746-8501 (JP); Shimoyama, Junichi, Tokyo 131-0045 (JP)
(72) Inventor: SHIMOYAMA, Junichi, Tokyo 131-0045 (JP); SUEMOTO, Yuya, Ayase-shi, Kanagawa 252-1123 (JP); AKIIKE, Ryo, Ayase-shi, Kanagawa 252-1123 (JP); MESUDA, Masami, Ayase-shi, Kanagawa 252-1123 (JP)
(74) Representative: Müller-Boré & Partner Patentanwälte PartG mbB
(86) International application number: PCT/JP2024/040631
(87) International publication number: WO 2025/105464

(57) **Abstract**

The present disclosure provides a boron powder having two or more peaks in a number distribution, wherein a peak frequency of a peak 2, which is a peak having a second highest frequency, relative to a peak frequency of a peak 1, which is a peak having a highest frequency, is more than 0.12. A peak size of the peak 1 is preferably smaller than a peak size of the peak 2.

## Description

### Technical Field

The present disclosure relates to a boron powder, a method for producing magnesium diboride and a magnesium diboride bulk.

### Background Art

Magnesium diboride (hereafter sometimes referred to as "MgB2") has a high critical temperature of 39 K and is expected as a superconducting material driven by a liquid hydrogen coolant. MgB2 is produced as a bulk or a wire by reacting a mixed powder of boron and magnesium through firing. However, compared with current superconducting materials such as niobium-titanium alloys, MgB2 reported to date has low superconducting properties and has not yet replaced such materials. Therefore, various studies have been conducted with the aim of improving the superconducting properties of MgB2.

For example, Patent Literature 1 has reported that addition of titanium to MgB2 provides a critical current density (JC) of 1.7 × 104 A/cm2 (20 K, 3 T) to 2.0 × 106 A/cm2 (5 K, 0 T) in a low magnetic field. In addition, Patent Literature 2 has reported that addition of silver to MgB2 provides a critical current density of 8.15 × 105 A/cm2 (37 K, 3 T) in a low magnetic field.

In contrast, MgB2 having a critical current density improved without using an additive element is disclosed; crystallized boron that is mechanically activated is used as the raw material to provide densified MgB2 and the MgB2 has an electric field current density of 0.29 A/cm2 (4.2 K, 9 T) in a high magnetic field.

The MgB2 of Patent Literature 3, which does not use an additive element, has a higher critical current density than existing MgB2. However, the MgB2 of Patent Literature 3 still has a low critical current density in a low magnetic field.

### Citation List

### Patent Literature

PTL 1: Japanese Unexamined Patent Application Publication No. 2003-095650
PTL 2: Japanese Unexamined Patent Application Publication No. 2008-120659
PTL 3: Japanese Unexamined Patent Application Publication No. 2005-508278

### Summary of Invention

### Technical Problem

An object of the present disclosure is to provide at least one of a boron powder that provides magnesium diboride having an improved critical current density in a low magnetic field without requiring an additive element, a method for producing magnesium diboride and a magnesium diboride bulk.

### Solution to Problem

For the present disclosure, methods for improving the critical current density of magnesium diboride without using an additive element were studied with attention focused on a precursor, particularly boron powder. As a result, it has been found that use of a boron powder having controlled properties as the precursor can provide magnesium diboride that exhibits a practical critical current density in a low magnetic field.

Specifically, the present invention is as described in the Claims and the gist of the present disclosure is as follows.
[1] A boron powder having two or more peaks in a number distribution, wherein a peak frequency of a peak 2, which is a peak having a second highest frequency, relative to a peak frequency of a peak 1, which is a peak having a highest frequency, is more than 0.12.
[2] The boron powder according to [1], wherein a peak size of the peak 1 is smaller than a peak size of the peak 2.
[3] The boron powder according to [1] or [2], wherein a peak size of the peak 1 is less than 1 µm.
[4] The boron powder according to any one of [1] to [3], wherein a peak size of the peak 2 is 1 µm or more.
[5] The boron powder according to any one of [1] to [4], wherein a ratio of a peak size of the peak 2 to a peak size of the peak 1 is 10 or more.
[6] The boron powder according to any one of [1] to [5], having an oxygen content of 1.5 mass% or more.
[7] The boron powder according to any one of [1] to [6], having an oxygen content of less than 3.5 mass%.
[8] A method for producing magnesium diboride, using the boron powder according to any one of [1] to [7].
[9] A magnesium diboride bulk, wherein the magnesium diboride bulk includes a crystal grain boundary and the crystal grain boundary includes at least one particle having a boron/magnesium atomic ratio B/Mg of 0.7 or more.
[10] The magnesium diboride bulk according to [9], wherein the particle has a maximum size of 150 nm or less in a direction perpendicular to the crystal grain boundary.
[11] The magnesium diboride bulk according to [9] or [10], wherein, in the crystal grain boundary within a range of a radius of 200 nm from a center position of the particle, at least one region of 40 nm by 40 nm includes the crystal grain boundary within the region and has a proportion of oxygen atoms of 6 atom% or less relative to 100 atom% of a total of magnesium atoms, boron atoms and oxygen atoms.
[12] The magnesium diboride bulk according to [9] or [10], wherein, in the crystal grain boundary within a range of a radius of 200 nm from a center position of the particle, at least one region of 40 nm by 40 nm includes the crystal grain boundary within the region and has a proportion of oxygen atoms of more than 6 atom% relative to 100 atom% of a total of magnesium atoms, boron atoms and oxygen atoms. Advantageous Effects of Invention

The present disclosure can provide a boron powder that provides magnesium diboride having an improved critical current density in a low magnetic field without requiring an additive element, a method for producing magnesium diboride using the boron powder and a magnesium diboride bulk.

### Brief Description of Drawings

[Fig. 1] Fig. 1 is the number distribution of a mixed
boron powder described in Example 1.
[Fig. 2] Fig. 2 is the number distribution of a boron powder 2 described in Comparative Example 1.
[Fig. 3] Fig. 3 is the number distribution of a boron powder 2 described in Comparative Example 2.
[Fig. 4] Fig. 4 is the number distribution of a mixed boron powder described in Example 2.
[Fig. 5] Fig. 5 is a scanning electron microscope (SEM) image of a MgB2 bulk described in Example 2.
[Fig. 6] Fig. 6 is a scanning electron microscope (SEM) image of a MgB2 bulk described in Comparative Example 3.
[Fig. 7] Fig. 7 is a scanning transmission electron microscope (STEM) image of the MgB2 bulk described in Example 2.
[Fig. 8] Fig. 8 is a scanning transmission electron microscope (STEM) image of the MgB2 bulk described in Comparative Example 3.

### Description of Embodiments

Hereinafter, the present disclosure will be described with reference to examples of embodiments. Note that the present disclosure encompasses any combinations of features and parameters described in the Description and the present disclosure also encompasses ranges of any combinations of upper limits and lower limits of values disclosed in the Description. Hereinafter, main terms used in the present embodiments will be described.

The term "number distribution" refers to the frequency distribution of particles constituting a powder, which is measured by a laser diffraction and scattering method and expressed by number-based frequency and particle size. The number distribution can be obtained under the following conditions using a general nanoparticle size distribution measuring apparatus (for example, SALD-7100, manufactured by

### SHIMADZU CORPORATION).

Calculation mode: Manual measurement
Number of measurements: 1
Measurement interval: 2 seconds

The refractive index of a sample for measurement can be a value selected based on the LDR method (light intensity distribution reproduction method). Specifically, first, from a plurality of refractive indices obtained by fitting, five points having a high fitting quality are extracted and then, among the extracted five refractive indices, a refractive index at which a particle size corresponding to a number frequency of 10.000% (what is called D10% size) is the largest can be used as the refractive index of the sample. Note that when the D10% sizes are the same values, similar examination can be performed in the order of D20% size, D30% size and so on for the extracted five refractive indices and a refractive index at which a particle size corresponding to one of the number frequencies is the largest can be used as the refractive index of the sample. The refractive index can be determined using analysis software supplied with the nanoparticle size distribution measuring apparatus (for example, WingSALDII, manufactured by SHIMADZU CORPORATION).

The measurement sample can be a slurry prepared by mixing 0.001 ± 0.00098 g of powder with 30 ± 25 mL of pure water and ultrasonically dispersing the mixture for 1 minute.

The obtained number distribution can be analyzed using the above-described analysis software supplied with the nanoparticle size distribution measuring apparatus, to detect peaks and to calculate peak frequencies and particle sizes, for example.

The term "peak" refers to the frequency peak of particle size detected by analysis of the number distribution. The term "peak frequency" refers to the height [%] of the peak. The term "peak size" refers to the particle size [nm or µm] corresponding to the size at the peak top of the peak.

### [Boron powder]

The present embodiment relates to a boron powder having two or more peaks in a number distribution, wherein a peak frequency of a peak 2, which is a peak having a second highest frequency, relative to a peak frequency of a peak 1, which is a peak having a highest frequency, (hereafter also referred to as "frequency peak ratio") is more than 0.12.

Hereinafter, the boron powder will be specifically described.

The boron powder of the present embodiment is preferably a powder consisting only of boron, but may contain unavoidable impurities. Examples of impurities contained in the powder of the present embodiment include one or more metal impurities selected from the group consisting of Al, Mn, Ti and Ag. In this case, the boron powder of the present embodiment can consist of boron and metal impurities in a total amount of 100 mass%. The mass content ratio of metal impurities to the boron powder may be 5 mass% or less, 3 mass% or less, 2 mass% or less, 1 mass% or less, or 0.5 mass% or less. The amount of metal impurities is preferably small and the mass content ratio of metal impurities may be 0 mass% or more or more than 0 mass%. The mass content ratio of metal impurities to the boron powder may be 0 mass% or more and 5 mass% or less, 0 mass% or more and 3 mass% or less, or more than 0 mass% and 2 mass% or less.

The boron powder of the present embodiment has two or more peaks in the number distribution. Having two or more peaks means that the powder of the present embodiment has a particle distribution including two or more particle groups having mutually different particle sizes. Use of such a powder as the precursor of MgB2 provides MgB2 that exhibits a practical critical current density (JC) in a low magnetic field regardless of the subsequent production method.

The boron powder of the present embodiment, which has two or more peaks, may have two or more and five or less peaks and may have two peaks. In the present embodiment, peak numbers can be assigned to peaks in descending order of peak frequency as peak 1, peak 2, ... peak n (n is an integer). Peak numbers can be assigned to peaks having the same peak frequency in ascending order of particle size for convenience. For convenience, the peak frequency and the peak size of each peak are respectively referred to as "Pn frequency" and "Pn size".

In the boron powder of the present embodiment, the peak frequency of the peak 2, which is the peak having the second highest frequency, relative to the peak frequency of the peak 1, which is the peak having the highest frequency, is more than 0.12. When the frequency peak ratio is more than 0.12, boron particles have improved packability and the resultant MgB2 has high density. The frequency peak ratio is preferably 0.5 or more or 0.7 or more. The frequency peak ratio is preferably less than 1.0 or 0.99 or less, more preferably more than 0.12 and less than 1.0, still more preferably 0.7 or more and less than 1.0 and particularly preferably 0.7 or more and 0.99 or less.

In the boron powder of the present embodiment, the peak size of the peak 1 is preferably smaller than the peak size of the peak 2. When the peak size of the peak 1 (P1 size) is smaller than the peak size of the peak 2 (P2 size), boron particles having a smaller particle size tend to fill voids formed between boron particles having a larger particle size and therefore the packing ratio of particles during molding tends to be improved.

The P1 size may be less than 1 µm, 0.5 µm or less, or 0.3 µm or less and may be 0.03 µm or more, 0.05 µm or more, or 0.07 µm or more. The P1 size is preferably 0.03 µm or more and less than 1 µm, more preferably 0.05 µm or more and 0.5 µm or less and still more preferably 0.07 µm or more and 0.3 µm or less.

The P2 size may be 1 µm or more, 2 µm or more, or 3 µm or more and may be 50 µm or less, 25 µm or less, or 10 µm or less. The P2 size is preferably 1 µm or more and 50 µm or less, more preferably 2 µm or more and 25 µm or less and still more preferably 3 µm or more and 10 µm or less.

The ratio of the P2 size to the P1 size (hereafter also referred to as a "peak size ratio") is preferably 10 or more. When the peak size ratio is 10 or more, smaller particles tend to fill voids of larger particles. The peak size ratio may be 20 or more or 30 or more and may be 50 or less or 40 or less. The peak size ratio is preferably 10 or more and 50 or less and more preferably 20 or more and 40 or less.

The peak frequency of the peak 1 (P1 frequency) and the peak frequency of the peak 2 (P2 frequency) at least satisfy the above-described frequency peak ratio. For example, the P1 frequency may be 5% or more, 9% or more, or 9.5% or more and may be less than 25.5% or 25% or less. The P1 frequency is preferably 5% or more and less than 25.5% and more preferably 9.5% or more and 25% or less. Similarly, the P2 frequency is less than the P1 frequency and may be 3.1% or more, 5% or more, or 7% or more and may be 20% or less or 15% or less. The P2 frequency is preferably 3.5% or more and 20% or less and more preferably 7% or more and 15% or less.

The boron powder of the present embodiment has an oxygen content of preferably 1.5 mass% or more and preferably 1.8 mass% or more or 2.0 mass% or more. When the oxygen content is 1.5 mass% or more, a decrease in flux pinning centers when formed into an MgB2 bulk is suppressed and the critical current density becomes less likely to decrease. The upper limit of the oxygen content may be less than 3.5 mass% or 3.0 mass% or less. The boron powder of the present embodiment has an oxygen content of preferably 1.5 mass% or more and less than 3.5 mass%, more preferably 1.8 mass% or more and less than 3.5 mass%, still more preferably 2.0 mass% or more and less than 3.5 mass% and particularly preferably 2.0 mass% or more and 3.0 mass% or less.

### [Method for producing boron powder]

The boron powder of the present embodiment may be produced by any method as long as the above-described features are satisfied. The production method is preferably, for example, a production method including a mixing step of mixing a boron powder having a peak size of less than 1 µm in the number distribution (hereafter also referred to as a "fine powder") and a boron powder having a peak size of 1 µm or more in the number distribution (hereafter also referred to as a "coarse powder").

The fine powder is a boron powder having a peak size of less than 1 µm in the number distribution. Use of such a boron powder having the peak size in the mixing step provides the peak 1 having a peak size of less than 1 µm. The peak size of the fine powder can be less than 1 µm, 0.5 µm or less, or 0.3 µm or less and can be 0.03 µm or more, 0.05 µm or more, or 0.07 µm or more. The peak size of the fine powder is preferably 0.03 µm or more and less than 1 µm, more preferably 0.05 µm or more and 0.5 µm or less and still more preferably 0.07 µm or more and 0.3 µm or less.

The fine powder may be a commercially available boron powder, but is preferably a powder produced by a production method including a step of treating a boron powder having a peak size of 1 µm or more (hereafter also referred to as a "treatment step").

The treatment process in the treatment step may be one or more selected from the group consisting of bead mill pulverization, a vapor deposition process, a liquid phase reduction process, a hydrothermal synthesis process, a neutralization decomposition process, a hydrolysis process, a sol-gel process, a laser treatment and a plasma treatment and is preferably a plasma treatment.

The plasma treatment is a treatment in which a powder is introduced into high-temperature plasma and the powder is vaporized and rapidly cooled to provide finer particles and is preferably a plasma treatment in which the powder is made finer to a nanometer size using radio-frequency (RF) plasma.

In the plasma treatment, the RF output may be 3 kW or more, preferably 3 kW or more and 200 kW or less and more preferably 6 kW or more and 150 kW or less.

In the plasma treatment, the boron feed rate may be 0.1 g/min or more, preferably 0.1 g/min or more and 10 g/min or less and more preferably 0.2 g/min or more and 2.0 g/min or less. As the boron feed rate increases, the particle size of the boron powder after the plasma treatment increases.

In the plasma treatment, the process gas may be argon, hydrogen or a mixed gas of argon and hydrogen and is preferably a mixed gas of argon and hydrogen. The ratio of hydrogen gas in the mixed gas may be more than 0.5 volume% or 0.7 volume% or more and may be 4.0 volume% or less or 3.5 volume% or less. The ratio of hydrogen gas in the mixed gas is preferably more than 0.5 volume% and 4.0 volume% or less and more preferably 1.0 volume% or more and 3.5 volume% or less.

The coarse powder is a boron powder having a peak size of 1 µm or more in the number distribution. Use of such a boron powder having the peak size in the mixing step provides the peak 2 having a peak size of 1 µm or more. The peak size of the coarse powder may be 50 µm or less, 30 µm or less, or 25 µm or less and may be 1 µm or more and 50 µm or less or 2 µm or more and 25 µm or less.

Each of the fine powder and the coarse powder may have a boron purity of 95% or more or 99% or more and 100% or less or less than 100%.

The fine powder may have an oxygen content of 1.5 mass% or more, 2.0 mass% or more, or 2.5 mass% or more. The upper limit of the oxygen content may be 5.0 mass% or less, 4.5 mass% or less, or 4.0 mass% or less. The fine powder has an oxygen content of preferably 1.5 mass% or more and 5.0 mass% or less, more preferably 2.0 mass% or more and 4.5 mass% or less and still more preferably 2.5 mass% or more and 4.0 mass% or less.

The coarse powder may have an oxygen content of 0.5 mass% or more, 1.0 mass% or more, or 1.5 mass% or more. The upper limit of the oxygen content may be 5.0 mass% or less, 4.5 mass% or less, or 4.0 mass% or less. The coarse powder has an oxygen content of preferably 0.5 mass% or more and 5.0 mass% or less, more preferably 1.0 mass% or more and 4.5 mass% or less and still more preferably 1.5 mass% or more and 4.0 mass% or less.

The boron powder of the present embodiment is obtained by mixing the fine boron powder and the coarse boron powder.

The mixing may be performed by any method of mixing the fine powder and the coarse powder without pulverizing the fine powder and the coarse powder. The method is preferably dry mixing, more preferably dry mixing using at least one of a rotating cylindrical mixer and a V-type mixer and still more preferably dry mixing using a V-type mixer.

In the mixing, the atmosphere can be one or more selected from the group consisting of an oxidizing atmosphere, an air atmosphere, a reducing atmosphere and an inert atmosphere and is preferably an inert atmosphere or an air atmosphere.

The fine powder and the coarse powder can be mixed at proportions such that the frequency peak ratio in the resultant powder falls within the above-described range. For the proportions that provide the above-described frequency peak ratio, the fine powder and the coarse powder are preferably mixed to provide a total amount of 100 mass% in which the amount of the fine powder is 5 mass% or more and 95 mass% or less, further 20 mass% or more and 50 mass% or less, and the amount of the coarse powder is 5 mass% or more and 95 mass% or less, further 50 mass% or more and 80 mass% or less.

The ratio of the oxygen content of the fine powder to the oxygen content of the coarse powder can be 1.1 or more, 1.5 or more, or 1.9 or more and can be 2.7 or less, 2.6 or less, or 2.5 or less. The ratio of the oxygen content of the fine powder to the oxygen content of the coarse powder is preferably 1.1 or more and 2.7 or less, more preferably 1.5 or more and 2.6 or less and still more preferably 1.9 or more and 2.5 or less. When the oxygen content ratio is within such ranges, bonding at crystal grain boundaries of magnesium diboride is made denser when formed into an MgB2 bulk and the critical current density tends to be improved.

### [Method for producing magnesium diboride]

The boron powder of the present embodiment can be used in publicly known applications of boron powder, but is preferably used as the precursor of magnesium diboride. Hereinafter, the method for producing magnesium diboride using the boron powder of the present embodiment will be described.

The method for producing magnesium diboride of the present embodiment may employ a publicly known method for producing magnesium diboride (MgB2) except that the boron powder of the present embodiment is used, and examples include a method of pressure-molding and heating a mixed powder of the boron powder of the present embodiment and magnesium (hereafter also referred to as an "in-situ method") and a method of molding and heating a mixed powder of the powder of the present embodiment, magnesium powder and magnesium diboride (hereafter also referred to as a "Premix method"). The method for producing magnesium diboride of the present embodiment is preferably the Premix method because the resultant magnesium diboride tends to exhibit a higher critical current density in a low magnetic field. The method for producing magnesium diboride of the present embodiment is preferably the in-situ method because magnesium diboride can be produced by the simpler method.

### (In-situ method)

In the in-situ method, a mixed powder of the boron powder of the present embodiment and magnesium powder is heated to produce magnesium diboride.

The mixed powder can be a powder obtained by mixing magnesium powder and the boron powder of the present embodiment such that a molar ratio (nMg/nB) is 0.5 or more or 0.505 or more and is 0.55 or less or 0.53 or less.

In the in-situ method, the pressure-molding conditions can be, for example, the following conditions.
Pressure conditions:
0.5 GPa or more or 1.0 GPa or more
3.0 GPa or less or 2.5 GPa or less

The pressure conditions in the in-situ method are preferably 0.5 GPa or more and 3.0 GPa or less and more preferably 1.0 GPa or more and 2.5 GPa or less.

In the in-situ method, the heating conditions can be, for example, the following conditions.
Heating temperature:
   550°C or more or 600°C or more and
   950°C or less or 900°C or less
Heating time:
   1 hour or more or 2 hours or more,
   24 hours or less or 12 hours or less

The heating temperature in the in-situ method is preferably 550°C or more and 900°C or less and more preferably 650°C or more and 850°C or less.

The heating time in the in-situ method is preferably 1 hour or more and 24 hours or less and more preferably 2 hours or more and 12 hours or less.

### (Premix method)

In the Premix method, a mixed powder of the boron powder of the present embodiment, magnesium powder and magnesium diboride is heated to produce magnesium diboride.

The mixed powder can be a powder obtained by mixing such that the molar ratio (nMg/nB) of magnesium powder to the boron powder of the present embodiment is 0.5 or more or 0.505 or more and is 0.55 or less or 0.53 or less and such that the molar ratio (nMg/nMgB2) of magnesium powder to MgB2 powder is 0.8 or more or 0.9 or more and is 1.5 or less or 1.4 or less.

In the Premix method, the pressure-molding conditions can be, for example, the following conditions.
Pressure conditions:
0.5 GPa or more or 1.0 GPa or more
3.0 GPa or less or 2.5 GPa or less

The pressure conditions in the Premix method are preferably 0.5 GPa or more and 3.0 GPa or less and more preferably 1.0 GPa or more and 2.5 GPa or less.

In the Premix method, the heating conditions can be, for example, the following conditions.
Heating temperature:
   550°C or more or 650°C or more and
   900°C or less or 850°C or less
Heating time:
   1 hour or more or 6 hours or more,
   36 hours or less or 24 hours or less

The heating temperature in the Premix method is preferably 550°C or more and 900°C or less and more preferably 650°C or more and 850°C or less.

The heating time in the Premix method is preferably 1 hour or more and 36 hours or less and more preferably 6 hours or more and 24 hours or less.

### -Preparation of magnesium diboride seed crystals-

In the Premix method, magnesium diboride before mixing is preferably pre-treated with a carboxylic acid to prepare magnesium diboride seed crystals and the magnesium diboride seed crystals are preferably used to produce magnesium diboride. The pre-treatment with the carboxylic acid can remove magnesium oxide and magnesium contained in magnesium diboride.

The carboxylic acid may be one or more selected from the group consisting of monocarboxylic acids, dicarboxylic acids and tricarboxylic acids. Specifically, the carboxylic acid is preferably one or more selected from the group consisting of acetic acid, propionic acid, butyric acid, valeric acid, caproic acid, benzoic acid, phthalic acid, oxalic acid, maleic acid and anhydrides thereof, more preferably one or more selected from the group consisting of acetic acid, propionic acid, valeric acid and caproic acid and still more preferably propionic acid. When the carboxylic acid is liquid at room temperature (25°C), the carboxylic acid may be directly used for the pre-treatment, or may be mixed with an organic solvent and then used for the pre-treatment. When the carboxylic acid is solid at room temperature (25°C), the carboxylic acid is dissolved in an organic solvent and then the pre-treatment is performed.

The pre-treatment is performed preferably by immersing, in the carboxylic acid, magnesium diboride before mixing, more preferably by immersing the magnesium diboride in acetic acid, propionic acid, valeric acid or caproic acid and still more preferably by immersing the magnesium diboride in propionic acid.

In the immersion, the treatment temperature and the treatment time are not particularly limited as long as the carboxylic acid does not volatilize or decompose. However, when the carboxylic acid is liquid at room temperature (25°C), the temperature is preferably less than the boiling point; when the carboxylic acid is solid at room temperature (25°C), the temperature is preferably less than the thermal decomposition temperature.

In the case of immersion in propionic acid, the treatment temperature and the treatment time can be, for example, the following conditions.
Treatment temperature:
   80°C or more or 100°C or more and
   140°C or less or 130°C or less
Treatment time:
   0.5 hours or more or 1 hour or more,
   5 hours or less or 3 hours or less

When the treatment temperature is set to 80°C or more, magnesium oxide and magnesium contained in magnesium diboride can be efficiently removed.

In the case of immersion in propionic acid, the heating temperature is preferably 80°C or more and 140°C or less and more preferably 100°C or more and 130°C or less.

In the case of immersion in propionic acid, the treatment time is preferably 0.5 hours or more and 5 hours or less and more preferably 1 hour or more and 3 hours or less.

### [Magnesium diboride]

The magnesium diboride obtained from the boron powder of the present embodiment may be a magnesium diboride having a porosity of 12% or less and an average crystal grain size of 60 nm or more and 1300 nm or less (hereafter also referred to as "magnesium diboride of the present embodiment"). The magnesium diboride exhibits a practical critical current density in a low magnetic field.

The magnesium diboride (MgB2) of the present embodiment is preferably a bulk and is preferably contained in a wire. From the viewpoint of mounting in a small superconducting apparatus such as a tabletop NMR, the magnesium diboride (MgB2) is preferably a bulk. On the other hand, from the viewpoint of mounting in a large superconducting apparatus such as a superconducting coil or a superconducting electric wire, the magnesium diboride (MgB2) is preferably contained in a wire.

Here, the bulk refers to a magnesium diboride sintered body, and the wire refers to a material in which magnesium diboride is filled in a metal tube such as a SUS tube.

### (Porosity)

The magnesium diboride of the present embodiment has a porosity of 12% or less and preferably 10% or less. When the porosity is 10% or less, a practical critical current density can be exhibited in a low magnetic field. The porosity is preferably low, but may be 3% or more or 5% or more and may be 3% or more and 12% or less, or 5% or more and 10% or less.

### (Average crystal grain size)

The magnesium diboride of the present embodiment preferably has an average crystal grain size of 60 nm or more and 1300 nm or less. When the average crystal grain size is 60 nm or more, an increase in grain boundaries of magnesium diboride can be suppressed, so that the influence of impurities such as oxides localized at grain boundaries can be reduced and the critical current density can be improved. When the average crystal grain size is 1300 nm or less, a decrease in density of grain boundaries serving as flux pinning centers can be suppressed, so that the critical current density can be improved. The average crystal grain size may be 100 nm or more or 150 nm or more and may be 500 nm or less or 300 nm or less. The average crystal grain size is preferably 100 nm or more and 500 nm or less, or 150 nm or more and 300 nm or less.

The crystal grain size of the magnesium diboride of the present embodiment may have a maximum value of 7 µm or less, 6.5 µm or less, or 6 µm or less and may have a minimum value of 30 nm or more, 35 nm or more, or 40 nm or more. The crystal grain size of the magnesium diboride of the present embodiment may be 30 nm or more and 7 µm or less, 35 nm or more and 6.5 µm or less, or 40 nm or more and 6 µm or less.

### -Methods for measuring porosity, average crystal grain size and crystal grain size distribution-

The porosity, the average crystal grain size and the crystal grain size distribution are values obtained from an SEM/EBSD observation image of magnesium diboride obtained using a Schottky field emission scanning electron microscope equipped with electron backscatter diffraction (EBSD) (for example, JSM-IT800SHL, manufactured by JEOL Ltd.) under the following conditions. For observation, pre-treatment by argon ion milling is preferably performed.

### <SEM/EBSD observation conditions>

Accelerating voltage: 15 kV
Observation magnification: 1000× or 5000×
Sample tilt: 70°

### <Argon ion milling condition>

### Accelerating voltage: 6 kV

For the average crystal grain size, portions where the difference in crystal orientation at a crystal interface is 5° or more are regarded as crystal grain boundaries to identify crystal grains, and the longest size of each crystal grain is measured and defined as the crystal grain size. The crystal grain sizes of 100 ± 50 crystal grains can be measured and the average thereof can be determined as the average crystal grain size.

The maximum value and the minimum value of the crystal grain sizes can be defined such that the maximum value is the largest and the minimum value is the smallest among the crystal grain sizes of 100 ± 50 crystal grains measured by the above method.

The porosity is the ratio of pores obtained from an observation image of a section of magnesium diboride and is the ratio of pores measured by image analysis of an SEM observation image of the surface of magnesium diboride subjected to argon ion milling.
Observation magnification: 5000×
Observation fields: 5 fields

For the porosity (%) of each field, the ratio (%) of black regions to the total area of black regions and white regions in each observation image can be determined. The average value of the porosities of the observed fields can be used as the porosity. The black region area can be calculated by image analysis.

In the image analysis, using general-purpose image analysis software (for example, Image-Pro, manufactured by Media Cybernetics), binarization can be performed by setting the threshold such that regions having pixel values of 100 or less in the SEM image appear black and the area can be calculated. The image analysis condition may be, for example, the following condition.

### Threshold (pixel value): 100

### (Critical current density)

The magnesium diboride of the present embodiment can exhibit a practical critical current density in a low magnetic field. The low magnetic field may be 0 T or more and 5 T or less. For example, the critical current density at a magnetic field of 0 T may be 1.05 × 106 Acm-2 or more, 1.1 × 106 Acm-2 or more, or 1.2 × 106 Acm-2 or more. When the magnesium diboride of the present embodiment is a bulk, the oxygen content may be 1 mass% or more, 2 mass% or more, 3 mass% or more, 3.5 mass% or more, or 3.8 mass% or more and the upper limit thereof may be 20 mass% or less, 15 mass% or less, or 10 mass% or less. When the magnesium diboride of the present embodiment is a bulk, the oxygen content may be 3 mass% or more and 20 mass% or less, 3.5 mass% or more and 15 mass% or less, or 3.8 mass% or more and 10 mass% or less.

### -Method for measuring critical current density-

In the present embodiment, the critical current density is a value calculated by the extended Bean model from the sample size and the hysteresis width, based on a magnetization hysteresis curve obtained using a general superconducting quantum interference device magnetometer (for example, MPMS XL-5s, manufactured by Quantum Design) under the following conditions.
Cooling gas: helium
Sample size: 1.5 mm × 1.5 mm × 0.5 mm
Measurement temperature: 15 K
Magnetic field sweep: 0 T → 5 T → -1 T

In the magnesium diboride bulk of the present embodiment, a particle may have a maximum size of 150 nm or less, 100 nm or less, or 70 nm or less in the direction perpendicular to the crystal grain boundary.

The "crystal grain boundary" in the magnesium diboride bulk can be defined as the longest straight line connecting two points among points where a grain and a grain boundary are in contact.

### (Oxygen atom proportion)

In the magnesium diboride bulk of the present embodiment, at least one region may have a proportion of oxygen atoms of 6 atom% or less, 4 atom% or less, or 3 atom% or less at a crystal grain boundary relative to 100 atom% of the total of magnesium atoms, boron atoms and oxygen atoms. In the magnesium diboride bulk of the present embodiment, at least one region may have a proportion of oxygen atoms of more than 6 atom%, more than 7 atom%, more than 8 atom%, or more than 10 atom% at a crystal grain boundary relative to 100 atom% of the total of magnesium atoms, boron atoms and oxygen atoms.

### -Method for determining oxygen atom proportion-

In the present embodiment, the oxygen atom proportion at a crystal grain boundary can be determined as follows. Using a field emission transmission electron microscope (model number: JEM-F200, manufactured by JEOL Ltd.) equipped with an energy dispersive X-ray analyzer (for example, JED-2300 silicon drift detector 100 mm2, manufactured by JEOL Ltd.), a STEM/EDS observation image of magnesium diboride is obtained under the following conditions; the image is analyzed using analysis software (for example, Analysis Station, manufactured by JEOL Ltd.) to determine, by a thin-film approximation method, the size of a particle present at a grain boundary of an MgB2 bulk and atomic percentages (atom%) of B (boron atoms), Mg (magnesium atoms) and O (oxygen atoms) in the particle present at the MgB2 crystal grain boundary and in the MgB2 crystal grain boundary region.

### <STEM observation conditions>

Sample thickness: 100 nm or less
Accelerating voltage: 200 kV
Observation magnification: 500,000×

### <EDS observation conditions>

Accelerating voltage: 200 kV
Observation magnification: 500,000×
Area analysis range: a square having a side length of 40 ± 1 nm

### (Ratio of magnesium oxide contained in magnesium diboride)

The ratio of magnesium oxide contained in magnesium diboride is determined as follows. Using a powder X-ray diffractometer (for example, device name: RINT UltimaIII, manufactured by RIGAKU Corporation), XRD measurement of a magnesium diboride bulk is performed under the following measurement conditions, and the ratio is determined as the ratio of a peak intensity derived from the oxide (magnesium oxide) observed at 43° to 44.5° to a peak intensity derived from MgB2 observed at 42.5°. The peak intensity ratio may be 0.2 or less or 0.1 or less and may be 0 or more or 0.001 or more. The ratio of the peak intensity derived from the oxide (magnesium oxide) observed at 43° to 44.5° to the peak intensity derived from MgB2 observed at 42.5° is preferably 0 or more and 0.2 or less, more preferably 0 or more and 0.1 or less and still more preferably 0.001 or more and 0.1 or less.

### <XRD measurement conditions>

Accelerating current/voltage: 40 mA/40 kV
Radiation source: CuKα radiation (λ = 0.15405 nm)
Measurement mode: continuous scan
Scan condition: 5°/min
Measurement range: 2θ = 20° to 50°
Divergence height limiting slit: 10 mm
Divergence/incident slit: 1°
Receiving slit: open
Detector: D/teX Ultra
Ni filter used

### EXAMPLES

Hereinafter, the present disclosure will be described with reference to Examples. However, the present disclosure is not limited to these.

### (Particle size distribution)

A particle size distribution measuring apparatus (apparatus name: SALD-7100, manufactured by SHIMADZU CORPORATION) was used to determine a volume-based particle size distribution. Prior to particle size distribution measurement, pure water was added to a powder sample to prepare a slurry and the slurry was ultrasonically dispersed for 1 minute as a pre-treatment.

Measurement was performed under the following conditions while dispersing the sample using a sample circulator supplied with the apparatus.
Calculation mode: manual measurement
Number of measurements: 1
Measurement interval: 2 seconds

The refractive index of the measurement sample was determined using analysis software supplied with the apparatus (WingSALDII, manufactured by SHIMADZU CORPORATION) by using an automatic refractive index calculation function based on the LDR method (light intensity distribution reproduction method). From among five values having a high fitting quality obtained by the automatic refractive index calculation function of the software, a refractive index at which a particle size corresponding to one of the number frequencies was the largest was determined as the refractive index of the sample, in the order of D10% size, D20% size, D30% size and so on.

The obtained number distribution was analyzed using the above-described analysis software.

### (Average crystal grain size)

A Schottky field emission scanning electron microscope equipped with electron backscatter diffraction (EBSD) (device name: JSM-IT800SHL, manufactured by JEOL Ltd.) was used to obtain an SEM observation image of the inside of a sample under the following conditions.
Accelerating voltage: 15 kV
Observation magnification: 1000× or 5000×
Sample tilt: 70°

In the obtained SEM observation image, portions where the difference in crystal orientation at a crystal interface was 5° or more were regarded as crystal grain boundaries to identify crystal grains. The longest size of each crystal grain was measured and defined as the crystal grain size. Crystal grain sizes of 100 ± 50 crystal grains were measured and the average thereof was determined as the average crystal grain size; the maximum size was determined as the maximum value of the crystal grain size and the minimum size was determined as the minimum value of the crystal grain size to determine the grain size distribution.

### (Porosity)

An SEM observation image of a surface of magnesium diboride subjected to argon ion milling was subjected to image analysis to measure the ratio of pores as porosity.
Observation magnification: 5000×
Observation fields: 5 fields

For the porosity (%) of each field, the ratio (%) of black regions to the total area of black regions and white regions in each observation image was determined. The average value of the porosities of the observed fields was used as the porosity. The black region area was calculated by image analysis.

In the image analysis, using general-purpose image analysis software (for example, Image-Pro, manufactured by Media Cybernetics), binarization was performed by setting the threshold such that regions having pixel values of 100 or less in the SEM image appear black and the area was calculated under the following image analysis condition.

Threshold (pixel value): 100

### (Oxygen content)

A field emission scanning electron microscope (model number: JSM-IT800SHL, manufactured by JEOL Ltd.) equipped with an energy dispersive X-ray microanalyzer (model number: Ultim Max65, manufactured by Oxford Instruments) was used to obtain an SEM/EDS observation image of magnesium diboride under the following conditions. The oxygen content (mass%) in magnesium diboride was calculated from the obtained SEM/EDS observation image by an XPP correction calculation method using analysis software (AZtec 5.0, manufactured by Oxford Instruments). For the observation, pre-treatment by argon ion milling was performed.

### <EDS observation conditions>

Accelerating voltage: 15 kV
Observation magnification: 2000×

### <Argon ion milling condition>

Accelerating voltage: 6 kV

### (Critical current density)

A superconducting quantum interference device magnetometer (model number: MPMS XL-5s, manufactured by Quantum Design) was used to measure the critical current density (JC) of an MgB2 bulk under the following conditions.

In measurement of the critical current density, a magnetic field was swept and magnetization was measured while stopping the magnetic field sweep at intervals of 1,000 Oe. A magnetization hysteresis curve was obtained by the magnetic field sweep of 0 T → 5 T → -1 T and Jc was calculated by the extended Bean model from the sample size and the hysteresis width.
Cooling gas: helium
Sample size: 1.5 mm × 1.5 mm × 0.5 mm
Measurement temperature: 15 K

### (STEM/EDS measurement)

A field emission transmission electron microscope (model number: JEM-F200, manufactured by JEOL Ltd.) equipped with an energy dispersive X-ray analyzer (JED-2300 silicon drift detector 100 mm2, manufactured by JEOL Ltd.) was used to obtain a STEM/EDS observation image of magnesium diboride under the following conditions.

### <STEM observation conditions>

Sample thickness: 100 nm or less
Accelerating voltage: 200 kV
Observation magnification: 500,000×

### <EDS observation conditions>

Accelerating voltage: 200 kV
Observation magnification: 500,000×
Area analysis range: a square having a side length of 40 ± 1 nm

### (Contents of B, Mg and O)

The obtained STEM/EDS observation image was analyzed using analysis software (Analysis Station, manufactured by JEOL Ltd.), by a thin-film approximation method, to determine the size of a particle present at a grain boundary of an MgB2 bulk and atomic percentages (atom%) of B (boron atoms), Mg (magnesium atoms) and O (oxygen atoms) in the particle present at the MgB2 crystal grain boundary and in the MgB2 crystal grain boundary region.

To determine the atomic percentages, EDS area analysis was performed on a square having a side length of 40 nm ± 1 nm. When measuring the particle present at the MgB2 crystal grain boundary, the square was positioned so as to include the center position of the particle within the square and subjected to EDS area analysis.

The "center position of the particle" refers to the midpoint of a straight line connecting two contact points between the particle and the grain boundary. In a case of a particle extending across a plurality of grain boundaries, the "center position of the particle" refers to the midpoint of the longest straight line among straight lines connecting two contact points between the particle and such a grain boundary. In this case, a location that is not the centroid position of the particle is used as the center of the particle.

When measuring the MgB2 crystal grain boundary, the square was positioned so as to include, within the square, the MgB2 grain boundary within a radius of 200 nm from the center position of the particle present at the MgB2 crystal grain boundary, and was subjected to EDS area analysis. For observation, pre-treatment by focused ion beam processing and argon ion milling was performed to make the sample thickness 100 nm or less.

### <Focused ion beam processing conditions>

Accelerating voltage: 30 kV
Ion source: Ga

### <Argon ion milling condition>

### Accelerating voltage: 1 kV

### (XRD measurement)

A general powder X-ray diffractometer (device name: RINT UltimaIII, manufactured by RIGAKU Corporation) was used to subject an MgB2 bulk to XRD measurement. The measurement conditions were as follows.
Accelerating current/voltage: 40 mA/40 kV
Radiation source: CuKα radiation (A = 0.15405 nm)
Measurement mode: continuous scan
Scan condition: 5°/min
Measurement range: 2θ = 20° to 50°
Divergence height limiting slit: 10 mm
Divergence/incident slit: 1°
Receiving slit: open
Detector: D/teX Ultra
Ni filter used

### (Example 1)

A commercially available boron powder (particle size: 45 µm or less, product name: BBE01PB, manufactured by Kojundo Chemical Laboratory Co., Ltd.) was used as the raw material and the boron powder was introduced into plasma (RF output: 6 kW, boron feed rate: 1 g/min) using a mixed gas of argon and hydrogen (argon:hydrogen = 98.5 volume%:1.5 volume%) as the process gas, to vaporize the boron powder. The vaporized boron was cooled to obtain a boron powder having a D50 size of 156 nm, which was defined as a boron powder 1. The boron powder 1 had an oxygen content of 3.6 mass%.

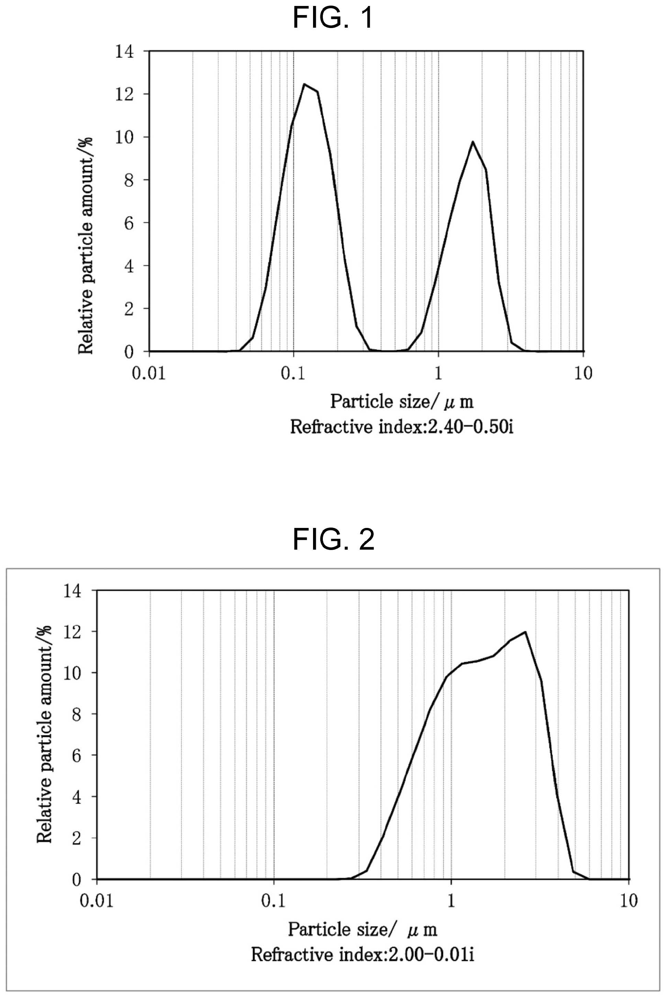

On the other hand, commercially available boron (300 mesh, manufactured by Furuuchi Chemical Corporation) was defined as a boron powder 2. The boron powder 2 had an oxygen content of 1.8 mass%. After the boron powder 1 and the boron powder 2 were weighed so that each accounted for 50 mass%, the boron powder 1 and the boron powder 2 were dry-mixed in an air atmosphere using an agate mortar to prepare a mixed boron powder. The mixed boron powder was found to have a bimodal volume particle size distribution having peaks at a particle size of 119 nm and a particle size of 1.73 µm. The volume particle size distribution of the mixed boron powder is illustrated in Fig. 1. The peak (P1) at a particle size of 119 nm had a peak frequency of 12.4% and the peak (P2) at a particle size of 1.73 µm had a peak frequency of 9.8%; and the frequency peak ratio was 0.79. The mixed boron powder had an oxygen content of 2.7 mass%.

Using the obtained mixed boron powder, an MgB2 bulk was produced by an in-situ powder-in-tube method. Specifically, a magnesium powder (100 mesh, manufactured by Furuuchi Chemical Corporation) and the mixed boron powder were weighed and mixed in an air atmosphere so as to satisfy a molar ratio Mg:B = 1.03:2.00 to obtain an Mg-B mixed powder and then the Mg-B mixed powder was introduced into a SUS tube having one end closed by uniaxial pressing. The open end was uniaxially pressed to seal the Mg-B mixed powder in the SUS tube and then the center portion of the SUS tube was pressed at a pressure of 1.5 GPa. The SUS tube was sealed in a quartz glass tube and then heated at 850°C for 3 hours to obtain a columnar MgB2 bulk having dimensions of 1.5 mm × 1.5 mm × 0.5 mm in thickness.

### (Comparative Example 1)

The same procedures as in Example 1 were performed except that the mixed boron powder was replaced by the boron powder 2 to obtain an MgB2 bulk of the present Comparative Example. The particle size distribution of the boron powder 2 is illustrated in Fig. 2. The boron powder 2 was found to have a peak at a particle size of 2.61 µm. The boron powder 2 was found to have a monomodal particle size distribution having no peak at a particle size of 250 nm or less and having a peak at a particle size of 2.62 µm. The peak (P1) at a particle size of 2.62 µm had a peak frequency of 12.0% and the frequency peak ratio was 0.

### (Comparative Example 2)

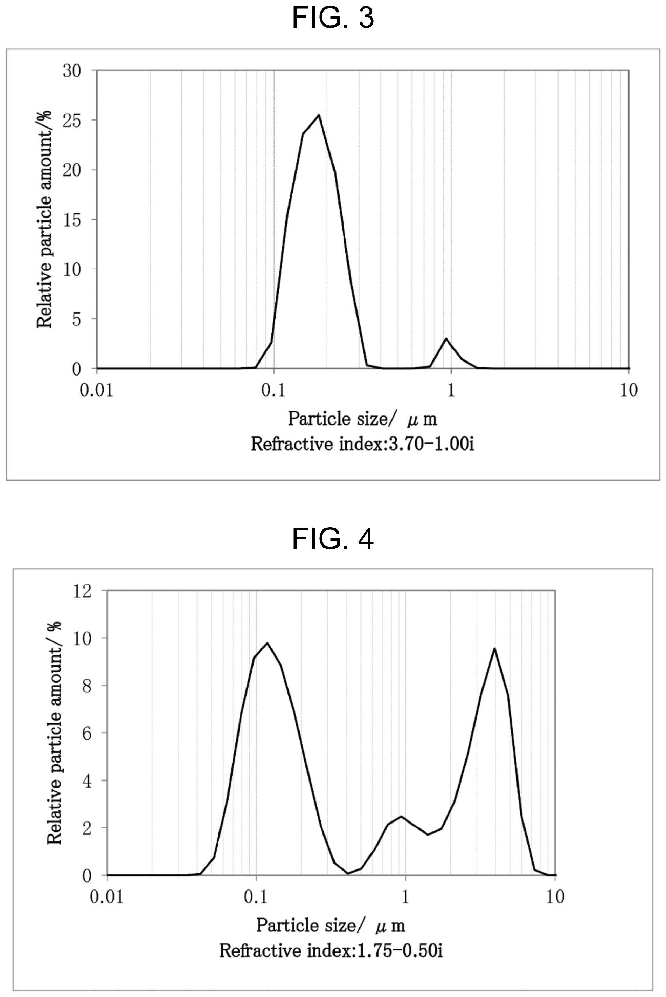

The same procedures as in Example 1 were performed except that the mixed boron powder was replaced by the boron powder 1 to obtain an MgB2 bulk of the present Comparative Example. The particle size distribution of the boron powder 1 is illustrated in Fig. 3. The boron powder 1 was found to have a bimodal particle size distribution having peaks at a particle size of 179 nm and a particle size of 933 nm. The peak (P1) at a particle size of 179 nm had a peak frequency of 25.5% and the peak (P2) at a particle size of 933 nm had a peak frequency of 3.0%; and the frequency peak ratio was 0.12.

The measurement results of the critical current density for Example 1 and Comparative Examples 1 and 2 will be described in Table 1.

**[Table 1]**

| | Critical current density [Acm⁻²] | | | | |
|---|---|---|---|---|---|
| | [×10⁵] | [×10⁵] | [×10⁴] | [×10⁴] | [×10³] |
| Magnetic field | 0 T | 1 T | 2 T | 3 T | 4 T |
| Example 1 | 6.22 | 2.5 | 7.75 | 1.78 | 2.79 |
| Comparative Example 1 | 3.14 | 1.19 | 3.37 | 0.58 | 0.5 |
| Comparative Example 2 | 4.96 | 2.05 | 5.79 | 1.04 | 0.9 |

### (Example 2)

The same procedures as in Example 1 were performed except that the boron powder 1 and the boron powder 2 were weighed so that boron powder 1:boron powder 2 = 30 mass%:70 mass% to prepare a mixed boron powder having a trimodal particle size distribution having peaks at a particle size of 119 nm, a particle size of 933 nm and a particle size of 3.95 µm. The particle size distribution of the mixed boron powder is illustrated in Fig. 4. The peak (P1) at a particle size of 119 nm had a peak frequency of 9.8%, the peak (P2) at a particle size of 933 nm had a peak frequency of 2.5% and the peak (P3) at a particle size of 3.95 µm had a peak frequency of 9.6%; the frequency peak ratio was 0.98. The mixed boron powder had an oxygen content of 2.3 mass%.

The obtained mixed boron powder was treated by a Premix-powder-in-Closed-tube method to produce an MgB2 bulk. Specifically, a magnesium powder (100 mesh, manufactured by Furuuchi Chemical Corporation), the mixed boron powder and an MgB2 powder (100 mesh, manufactured by Furuuchi Chemical Corporation) were weighed in an air atmosphere so as to satisfy a molar ratio Mg:B:MgB2 = 1.2:2.0:1.0.

Into a SUS tube having one end closed by uniaxial pressing, Mg/MgB2+B/Mg were introduced in this order so as to satisfy a molar ratio Mg:MgB2+B:Mg = 0.6:3.0:0.6. The open end was uniaxially pressed to seal the Mg-B-MgB2 mixed powder in the SUS tube and the center portion of the SUS tube was pressed at a pressure of 1.5 GPa. The pressed body was sealed in a quartz glass tube and then heated at 800°C for 24 hours to obtain an MgB2 bulk.

### (Comparative Example 3)

The same procedures as in Example 2 were performed except that the mixed boron powder was replaced by the boron powder 2 to obtain an MgB2 bulk of the present Comparative Example.

For Example 2 and Comparative Example 3, the measurement results of the critical current density will be described in Table 2 and the measurement results of the porosity, the average crystal grain size, the maximum value of crystal grain size, the minimum value of crystal grain size and the oxygen content will be described in Table 3.

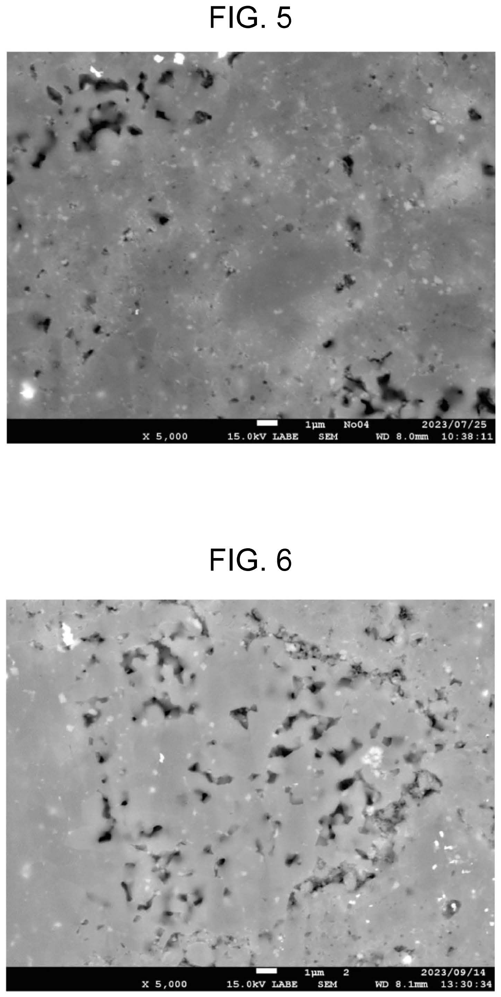

Scanning electron microscope observation images of the MgB2 bulk bodies of Example 2 and Comparative Example 3 are illustrated in Fig. 5 and Fig. 6.

**[Table 2]**

| | Critical current density [Acm⁻²] | | | | |
|---|---|---|---|---|---|
| | [×10⁵] | [×10⁵] | [×10⁵] | [×10⁴] | [×10³] |
| Magnetic field | 0 T | 1 T | 2 T | 3 T | 4 T |
| Example 2 | 12.5 | 8.74 | 2.99 | 5.86 | 9.6 |
| Comparative Example 3 | 5.27 | 3.36 | 1.01 | 2.13 | 3.95 |

**[Table 3]**

| | Porosity [%] | Average crystal grain size [nm] | Maximum value of crystal grain size [µm] | Minimum value of crystal grain size [nm] | Oxygen content [mass%] |
|---|---|---|---|---|---|
| Example 2 | 5.4 | 270 | 6 | 40 | 3.9 |
| Comparative Example 3 | 12.2 | 1640 | 7 | 250 | 3.7 |

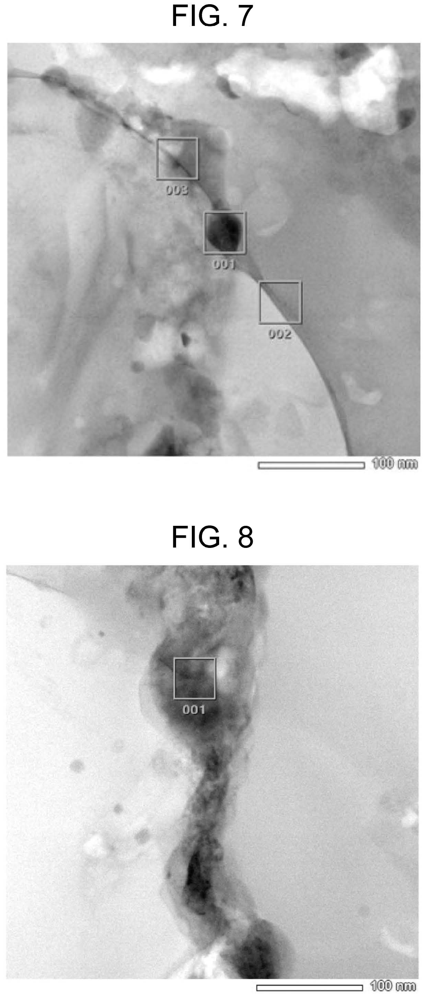

STEM observation images of the MgB2 bulk bodies of Example 2 and Comparative Example 3 are respectively illustrated in Fig. 7 and Fig. 8. The STEM/EDS measurement results of contents of B, Mg and O in a particle present at a crystal grain boundary of the MgB2 bulk in Example 2 and in a crystal grain boundary in Comparative Example 3 will be described in Table 4. In Table 4, the analysis region of Example 2 is the region 001 described in Fig. 7 and the analysis region of Comparative Example 3 is the region 001 described in Fig. 8. Note that these regions are regions of 40 nm by 40 nm.

**[Table 4]**

| | B [atom%] | O [atom%] | Mg [atom%] | B/Mg |
|---|---|---|---|---|
| Example 2 | 54 | 6 | 40 | 1.4 |
| Comparative Example 3 | 26 | 29 | 45 | 0.6 |

For Example 2, the STEM/EDS measurement results of the size of the particle present at the crystal grain boundary of the MgB2 bulk and contents of B, Mg and O will be described in Table 5.

Note that Regions 001, 002 and 003 in Table 5 are regions of 40 nm by 40 nm illustrated in Fig. 7.

**[Table 5]**

| | B [atom%] | O [atom%] | Mg [atom%] | Size of particle in direction perpendicular to crystal grain boundary [nm] | Distance from particle [nm] |
|---|---|---|---|---|---|
| Region 001 | 54 | 6 | 40 | 41 | - |
| Region 002 | 58 | 1 | 41 | - | 91 |
| Region 003 | 51 | 12 | 37 | - | 84 |

As indicated in the above table, it was confirmed that the MgB2 bulk of Example 2 had an improved critical current density of magnesium diboride at each magnetic field as compared with the case where the particle size distribution had one peak.

In addition, as illustrated in Fig. 5 and Fig. 6, the MgB2 bulk of the Example was found to be a sintered body with few voids.

### (Example 3)

A commercially available boron powder (particle size: 45 µm or less, product name: BBE01PB, manufactured by Kojundo Chemical Laboratory Co., Ltd.) was used as the raw material and the boron powder was introduced into plasma (RF output: 6 kW, boron feed rate: 1 g/min) using a mixed gas of argon and hydrogen (argon:hydrogen = 98.8 volume%:1.2 volume%) as the process gas, to vaporize the boron powder. The vaporized boron was cooled to obtain a boron powder having a D50 size of 134 nm, which was defined as a boron powder 3. The boron powder 3 had an oxygen content of 3.0 mass%.

The boron powder 3 and the boron powder 2 were weighed so that each accounted for 50 mass% and then the boron powder 3 and the boron powder 2 were dry-mixed in an air atmosphere using an agate mortar to prepare a mixed boron powder. The mixed boron powder had an oxygen content of 2.4 mass%. The same procedures as in Example 2 were performed, except for the above, to synthesize a magnesium diboride bulk, which was evaluated for critical current density. The results will be described in Table 6.

### (Example 4)

A commercially available boron powder (particle size: 45 µm or less, product name: BBE01PB, manufactured by Kojundo Chemical Laboratory Co., Ltd.) was used as the raw material and the boron powder was introduced into plasma (RF output: 6 kW, boron feed rate: 1 g/min) using a mixed gas of argon and hydrogen (argon:hydrogen = 99.5 volume%:0.5 volume%) as the process gas, to vaporize the boron powder. The vaporized boron was cooled to obtain a boron powder having a D50 size of 134 nm, which was defined as a boron powder 4. The boron powder 4 had an oxygen content of 5.1 mass%.

The boron powder 4 and the boron powder 2 were weighed so that each accounted for 50 mass% and then the boron powder 4 and the boron powder 2 were dry-mixed in an air atmosphere using an agate mortar to prepare a mixed boron powder. The mixed boron powder had an oxygen content of 3.5 mass%. The same procedures as in Example 2 were performed, except for the above, to synthesize a magnesium diboride bulk, which was evaluated for critical current density. The results will be described in Table 6.

**[Table 6]**

| | Critical current density [Acm⁻²] | | | | |
|---|---|---|---|---|---|
| | [×10⁵] | [×10⁵] | [×10⁴] | [×10⁴] | [×10³] |
| Magnetic field | 0 T | 1 T | 2 T | 3 T | 4 T |
| Example 3 | 15.1 | 10.4 | 3.3 | 6.2 | 7.1 |
| Example 4 | 4.1 | 1.8 | 0.6 | 1.9 | 3.2 |

### (Example 5)

10 g of the magnesium diboride bulk obtained in Example 1 was pulverized in a mortar until the average particle size became 2 µm or less. The pulverized magnesium diboride was placed in a glass container, 100 mL of propionic acid (purity: 98%, manufactured by FUJIFILM Wako Pure Chemical Corporation) was added and the mixture was heated to 110°C and held for 1 hour. Thereafter, the glass container was allowed to cool and the propionic acid was removed by decantation; 100 mL of ethanol was then added and mixed, followed by decantation again. This decantation using ethanol was performed three times and then drying at room temperature (25°C) was performed to obtain a magnesium diboride powder, which was used as magnesium diboride seed crystals.

The magnesium diboride seed crystals were used and a Premix-powder-in-Closed-tube method was performed to produce an MgB2 bulk. Specifically, a magnesium powder (100 mesh, manufactured by Furuuchi Chemical Corporation), the boron powder 1 and a MgB2 powder (100 mesh, manufactured by Furuuchi Chemical Corporation) were weighed in an air atmosphere so as to satisfy a molar ratio Mg:B:MgB2 = 1.2:2.0:1.0. Into a SUS tube having one end closed by uniaxial pressing, Mg/MgB2+B/Mg were introduced in this order so as to satisfy a molar ratio Mg:MgB2+B:Mg = 0.6:3.0:0.6. The open end was uniaxially pressed to seal the Mg-B-MgB2 mixed powder in the SUS tube and then the center portion of the SUS tube was pressed at a pressure of 1.5 GPa. The pressed body was sealed in a quartz glass tube and then heated at 850°C for 12 hours to obtain an MgB2 bulk. The obtained MgB2 bulk was subjected to X-ray diffractometry and the ratio of the peak intensity derived from an oxide (magnesium oxide) around 43° to the peak intensity derived from MgB2 at 42.5° was 0. The measurement results of the critical current density of the bulk will be described in Table 7.

### (Example 6)

The same procedures as in Example 5 were performed except that the etching treatment of magnesium diboride seed crystals with propionic acid was not performed, to produce an MgB2 bulk. The obtained MgB2 bulk was subjected to X-ray diffractometry and the ratio of the peak intensity derived from an oxide (magnesium oxide) at 43° to 44.5° to the peak intensity derived from MgB2 at 42.5° was 0.18. The measurement results of the critical current density of the bulk will be described in Table 7.

**[Table 7]**

| | Critical current density [Acm⁻²] | | | | |
|---|---|---|---|---|---|
| | [×10⁵] | [×10⁵] | [×10⁴] | [×10⁴] | [×10³] |
| Magnetic field | 0 T | 1 T | 2 T | 3 T | 4 T |
| Example 5 | 9.8 | 5.2 | 1.9 | 5.0 | 9.0 |
| Example 6 | 8.0 | 4.6 | 1.3 | 2.4 | 1.8 |

The present application is based on a Japanese patent application filed on November 17, 2023 (Japanese Patent Application No. 2023-195915) and a Japanese patent application filed on March 29, 2024 (Japanese Patent Application No. 2024-057471), the entire contents of which are incorporated herein by reference. In addition, all references cited herein are incorporated by reference in their entirety.

## Claims

1. A boron powder having two or more peaks in a number distribution, wherein a peak frequency of a peak 2, which is a peak having a second highest frequency, relative to a peak frequency of a peak 1, which is a peak having a highest frequency, is more than 0.12.

2. The boron powder according to claim 1, wherein a peak size of the peak 1 is smaller than a peak size of the peak 2.

3. The boron powder according to claim 1 or 2, wherein a peak size of the peak 1 is less than 1 µm.

4. The boron powder according to any one of claims 1 to 3, wherein a peak size of the peak 2 is 1 µm or more.

5. The boron powder according to any one of claims 1 to 4, wherein a ratio of a peak size of the peak 2 to a peak size of the peak 1 is 10 or more.

6. The boron powder according to any one of claims 1 to 5, having an oxygen content of 1.5 mass% or more.

7. The boron powder according to any one of claims 1 to 6, having an oxygen content of less than 3.5 mass%.

8. A method for producing magnesium diboride, using the boron powder according to any one of claims 1 to 7.

9. A magnesium diboride bulk,
wherein the magnesium diboride bulk includes a crystal grain boundary and
the crystal grain boundary includes at least one particle having a boron/magnesium atomic ratio B/Mg of 0.7 or more.

10. The magnesium diboride bulk according to claim 9,
wherein the particle has a maximum size of 150 nm or less in a direction perpendicular to the crystal grain boundary.

11. The magnesium diboride bulk according to claim 9 or 10, wherein, in the crystal grain boundary within a range of a radius of 200 nm from a center position of the particle, at least one region of 40 nm by 40 nm includes the crystal grain boundary within the region and has a proportion of oxygen atoms of 6 atom% or less relative to 100 atom% of a total of magnesium atoms, boron atoms and oxygen atoms.

12. The magnesium diboride bulk according to claim 9 or 10, wherein, in the crystal grain boundary within a range of a radius of 200 nm from a center position of the particle, at least one region of 40 nm by 40 nm includes the crystal grain boundary within the region and has a proportion of oxygen atoms of more than 6 atom% relative to 100 atom% of a total of magnesium atoms, boron atoms and oxygen atoms.
